# EUROPEAN PATENT SPECIFICATION

(11) **EP 3 075 617 B1**
(45) Date of publication and mention of the grant of the patent: **13.09.2017**
(21) Application number: 15382153.3
(22) Date of filing: 30.03.2015
(51) Int. Cl.: B60T 8/26, B62L 3/08

(54) **Combined brake device for vehicles**
Kombinierte Bremsvorrichtung für Fahrzeuge
Dispositif de freinage combiné pour véhicules

(43) Date of publication of application: 05.10.2016
(73) Proprietor: J.Juan S.A., 08850 Gavá (ES)
(72) Inventor: Moner Salvador, Enric, 08850 GAVÁ (ES)
(74) Representative: Carvajal y Urquijo, Isabel

(56) References cited:
- DE-A1-102009 009 269
- JP-A- H10 218 071
- JP-A- 2005 289 089

## Description

### Field of the Invention

The present invention relates to a combined brake device for vehicles, namely for motorcycles that integrate a hydraulic brake on one wheel and a mechanical brake on the other.

### Background of the invention

Currently, most four-wheel vehicles are equipped with powerful brake assist systems, putting at a clear disadvantage, in this respect, two-wheel motorized vehicles, and even more so, light motorcycles. For this reason, it is necessary to incorporate braking systems into these vehicles that improve the performance of conventional brake systems, in order to achieve improved road safety.

Among the most popular is the anti-lock braking systems, known as ABS, which offer great stability to the driving by preventing the loss of control of the vehicle. These brake systems are so widespread, that their use is expected to become mandatory in the European Union for all the motorcycles having a cylinder capacity equal to or above 125 cc. While the motorcycles of between 50 cc and 125 cc shall incorporate at least a combined brake system to improve their braking performance.

Many of these motorcycles of low cylinder capacity, particularly those of lower cost and performance, usually incorporate rear brakes, mechanical for the most part (drum brakes), along with front hydraulic brakes (disc brakes actuated by hydraulic parts). Thus, the incorporation of ABS braking systems or combined brake systems in this type of motorcycles increases significantly the cost of these vehicles.

Until now, the known combined systems for all this range of motorcycles, which integrate rear mechanical brakes along with front hydraulic brakes, are complex, expensive, and usually their use has significant drawbacks.

Document US2010/0052416A1 discloses one of these combined brake systems. In it is possible to appreciate a complex mechanism for distributing the braking force, formed by a brake pump configured to activate a front hydraulic brake, and by a significant number of cams that act on said pump following the activation of the rear brake. Where said distributing mechanism needs at least three mechanical cables to control the system; two of them connected from the brake handle to the cam assembly and another one connected from said cam assembly to the rear brake. Thus, this complexity translates into an increased manufacturing cost, longer mounting time, and higher risk of breakdowns arising, more complex repair works, and increased difficulties for adapting thereof into existing vehicles. Document JPH10218071A also refers to a multi-cable combined brake system having the mentioned drawbacks.

Document JP2005289089A relates to an interlocked braking device comprising a cable configured to activate a mechanical brake by means of a cable pull caused by a first activation, and a distributing mechanism. The distributing mechanism comprises a brake pump configured to activate a hydraulic brake, and a knocker arm configured to act on the brake pump through the action of the first activation. The cable is provided with a sheath linked to the knocker arm, and the cable pull generates a reaction pull of the sheath capable of causing a movement of the knocker arm configured to activate the brake pump. The distributing mechanism further comprises a transmission element configured to transmit the reaction pull of the sheath on the knocker arm. Adversely, the transmission element is not provided with a rotatory hinge. Instead of this, the transmission element retains the sheath without allowing a relative movement between them. Even though the transmission element is configured to slide in axial direction of the cable when the interlocked brake operating cable is operated, it does not completely prevent the misalignment of the sheath. So, with every movement of the sheath, the end of the same squeezes and bends against its housing in the transmission element, due to the fact that the transmission element cannot rotate. This worsens the performance of the reaction pull's transmission, increases the stress of the sheath against the transmission element and, if the sheath is significantly deformed, it might also constrict the cable within the same.

As far as adaptability is concerned, in some cases it is so difficult to adapt the known combined systems to existing motorcycles, that many times the solution is to redesign the thermodynamic assembly of the vehicle so as to adapt a rear hydraulic brake, and thus being able to use in this way a combined hydraulic-hydraulic system.

The present invention solves the aforementioned problems thanks to a combined brake device that enables satisfying in a simpler and more economical manner the full range of vehicles, integrating all the functions needed to enjoy a great effectiveness, and being able to be easily integrated into existing vehicles with minor modifications.

### Description of the invention

The combined brake device for vehicles of the present invention comprises:
- a cable configured to activate a mechanical brake by means of a cable pull caused by a first activation; and
- a distributing mechanism comprising:
   - a brake pump configured to activate a hydraulic brake; and
   - an activation cam configured to act on the brake pump through the action of the first activation.

The cable of said device is provided with a sheath linked to the activation cam, wherein the cable pull generates a reaction pull of the sheath capable of causing a movement of the activation cam configured to activate the brake pump.

In general, along its path to connect with the different components forming a combined brake system, the cable usually ends up adopting different positions, or curved shapes. The sheath enables transmitting the cable pull in said non-rectilinear positions, preventing the cable from straightening up. To this end, the sheath is pulled with the same force with which the cable is pulled during the activation thereof. Thus, the cable pull generates a reaction pull of the sheath. This operating principle is the one availed to activate the brake pump by means of one single cable.

Preferably, the cable comprises a first terminal configured to be joined to the first activation (brake handle), and a second terminal configured to be joined to the mechanical brake, wherein said cable has a continuity between the first terminal and the second terminal, constituting one single cable.

Preferably, the cable comprises an intermediate terminal, which is integral therewith and configured to cause the movement of the activation cam following a safety stroke of said cable. Said safety stroke establishes a movement of the cable, following which the hydraulic brake goes always into operation. This safety measure serves to ensure that the hydraulic brake comes into action after a specific moment, either to enhance the braking, or to compensate possible maladjustments of the mechanical brake or the cable that prevent it from acting properly. In other words, if the mechanical brake of a vehicle stops functioning, even actuating on said mechanical brake, the hydraulic brake goes always into operation after a specific moment.

Normally the distributing mechanism is firmly fastened with screws to the vehicle frame, forming integral part thereof, although it may also operate correctly in mountings of the floating-type, i.e., just using plastic ties, so as to avoid noises, enormously facilitating the integration thereof into existing vehicles. The distributing mechanism comprises a transmission element configured to transmit the reaction pull of the sheath on the activation cam. Said transmission element is joined to the activation cam by means of a rotatory hinge, which enables the rotation of said activation cam, and has a junction end configured to retain the sheath while at the same time letting the cable pass through the transmission element.

The distributing mechanism comprises a delay element configured to delay the movement of the activation cam on the brake pump. Preferably, said delay element is formed by a delay spring, which opposes the reaction pull of the sheath with a delay force, enabling the movement of the activation cam when the reaction pull exceeds the delay force. The delay force is initially determined by the elastic modulus of the delay spring, causing as a function thereof a longer or shorter delay in the activation of the hydraulic brake.

Preferably, to regulate the delay force, the delay element may comprise an adjusting nut configured to regulate the preload of the delay spring. At the same time, said adjusting nut has a pushing end in contact with the delay spring and an adjusting end screwed to a delay end of the transmission element. In such a way that by screwing and unscrewing said adjusting nut it is possible to vary the relative position thereof with respect to the delay end, making it possible to adjust the compression of the delay spring. Nevertheless, it is possible to do without the delay element, by simply adjusting the different components of the device during the mounting thereof on the vehicle.

The delay end and the adjusting end optionally may incorporate an inner chamber in which an intermediate terminal is arranged, wherein the cable pull causes said intermediate terminal to move across the chamber until contacting the adjustment end, once the cable reaches the safety stroke.

The brake pump and the activation cam are joined through a rotation shaft, which enables a relative rotation movement between the brake pump and the activation cam.

Preferably, the brake pump comprises a supporting body, and an actuator shaft configured to receive the movement of the activation cam and transmit a hydraulic pressure towards the hydraulic brake. Whereas the activation cam comprises an oscillating body joined to the supporting body through the rotation shaft, and a pushing face in contact with the actuator shaft. At the same time, the activation cam may comprise a limiting stop configured to make contact with the supporting body of the brake pump and stop the movement of said activation cam.

The combined brake device of the present invention comprises a pulling element configured to pull the cable, wherein said pulling element is formed by:
- a regulating nut that has a junction point configured to be joined to the mechanical brake; and
- a threaded shaft joined to an end of the cable, that goes through said regulating nut and is configured to move linearly with respect to the same by screwing and unscrewing said regulating nut.

In order to adjust the activation sensitivity of the mechanical brake, the combined brake device comprises an adjusting element configured to adjust an initial stroke of the cable following which the actuation of the mechanical brake starts. Preferably, said adjusting element is formed by an adjusting spring, which opposes the cable pull with an initial force, enabling the movement of the activation lever of the mechanical brake when the cable pull exceeds the initial force. The adjusting element operates together with the pulling element to regulate the initial stroke, a proper adjustment thereof being required so the device operates efficiently.

Preferably, the sheath comprises:
- a first length that has a first end stop configured to be fixed to the first activation and a first intermediate stop joined to the distributing mechanism; and
- a second length that has a second end stop configured to be fixed to the mechanical brake and a second intermediate stop joined to the distributing mechanism.

Preferably, the second intermediate stop is joined to the junction end of the transmission element.

### Brief description of the drawings

Next, for a better understanding of the invention, a series of drawings will be described very briefly. Said drawings are expressly related to an embodiment of said invention and are presented as a non-limiting example thereof.
Figure 1 represents a diagram of a brake system of a motorcycle, according to a first exemplary application, which incorporates the combined brake device of the present invention.
Figure 2 represents a partial diagram of the brake system of figure 1, wherein a longitudinal section of the combined brake device of the present invention is shown.
Figure 3 represents an enlarged view of the central portion of the device, according to a variant of the device incorporating a safety intermediate terminal.
Figure 4 represents a detailed view of area "Z" of figure 3.
Figure 5 represents a longitudinal view of the combined brake device prior to the installation thereof in the vehicle, as it would be delivered.
Figure 6 represents a diagram of the device for an initial stroke of the first activation, which causes an initial braking in which only the mechanical brake acts.
Figure 7 represents a diagram of the device for a larger stroke of the first activation, which causes a braking in which the mechanical brake and the hydraulic brake act jointly (combined braking).
Figure 8 represents a diagram of a brake system of a motorcycle, according to a second exemplary application, which incorporates the combined brake device of the present invention, as well as, an anti-lock system on the front wheel (one-channel ABS).
Figure 9 represents a diagram of a brake system of a motorcycle, according to a third exemplary application, which incorporates the combined brake device of the present invention, and which further enables acting on several pistons of the brake caliper using independent hydraulic circuits.

### Detailed description of the invention

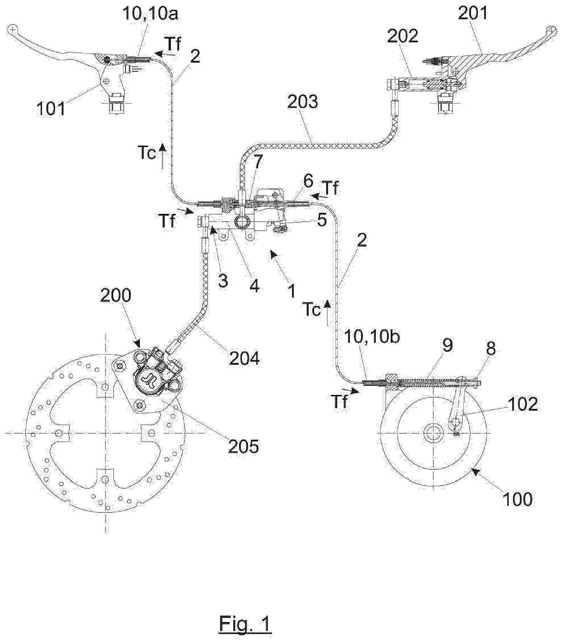

Figure 1 shows a diagram of a brake system of a motorcycle, according to a first exemplary application, which incorporates the combined brake device (1) of the present invention. For example, for a motorcycle of the "scooter" variety with a cylinder capacity below 125 cm³.

As it can be appreciated, the system comprises:
- a mechanical brake (100) arranged on the rear wheel of the motorcycle, which in turn has a first activation (101) configured to act upon an activation lever (102) associated with a brake drum;
- a hydraulic brake (200) arranged on the front wheel of the motorcycle, which in turn has a second activation (201) configured to act upon a manual brake pump (202), wherein said manual brake pump (202) is configured to propel brake fluid, through a hydraulic circuit formed by two hydraulic hoses (203, 204), towards a hydraulic brake caliper (205); and
- a combined brake device (1) according to the present invention. As can be appreciated, the combined brake device (1) in turn comprises:
- a cable (2) configured to activate the mechanical brake (100) by means of a cable pull (Tc) caused by the first activation (101); and
- a distributing mechanism (3), which in turn comprises:
   - a brake pump (4), in this case a salve pump, configured to activate the hydraulic brake (200); and
   - an activation cam (5) configured to act on the brake pump (4) through the action of the first activation (101).

As can be appreciated, a first hydraulic hose (203) establishes the communication of the brake fluid between the manual brake pump (202) and the brake pump (4), while a second hydraulic hose (204) establishes the communication of the brake fluid between the brake pump (4) and the hydraulic caliper. Although it is not illustrated in the figures, the hoses (203, 204) are in hydraulic communication within the brake pump (4), i.e., they are connected as a "by-pass", in such a way that whenever the second activation (201) is activated the hydraulic brake (200) acts.

The cable (2) of said device (1) is provided with a sheath (10) linked to the activation cam (5), wherein the cable pull (Tc) generates a reaction pull (Tf) of the sheath (10) capable of causing a movement of the activation cam (5), which in turn enables to activate the brake pump (4).

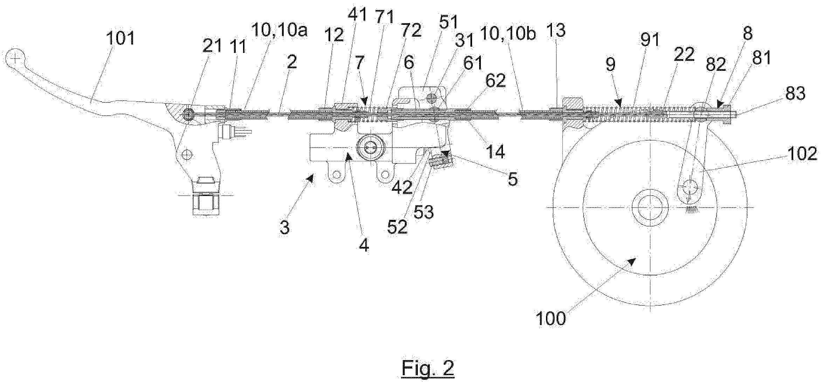

Figure 2 shows a partial diagram of the brake system of figure 1, in which can be appreciated more clearly the main components of the device (1). As it can be observed, the cable (2) comprises a first terminal (21) configured to be joined to the first activation (101), and a second terminal (22) configured to be joined to the mechanical brake (100). Furthermore, it can also be clearly observed that there is a continuity along said cable (2) between the first terminal (21) and the second terminal (22), thus constituting one single cable (2).

At the same time it is possible to appreciate that the distributing mechanism (3) comprises a transmission element (6) configured to transmit the reaction pull (Tf) of the sheath (10) on the activation cam (5). According to the present example, said transmission element (6) is joined to the activation cam (5) by means of a rotatory hinge (61), which enables the rotation of said activation cam (5), and has a junction end (62) configured to retain the sheath (10) while at the same time letting the cable (2) pass through the transmission element (6).

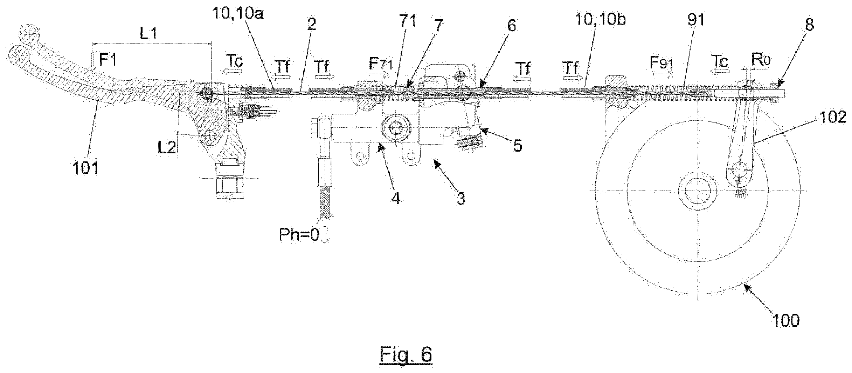

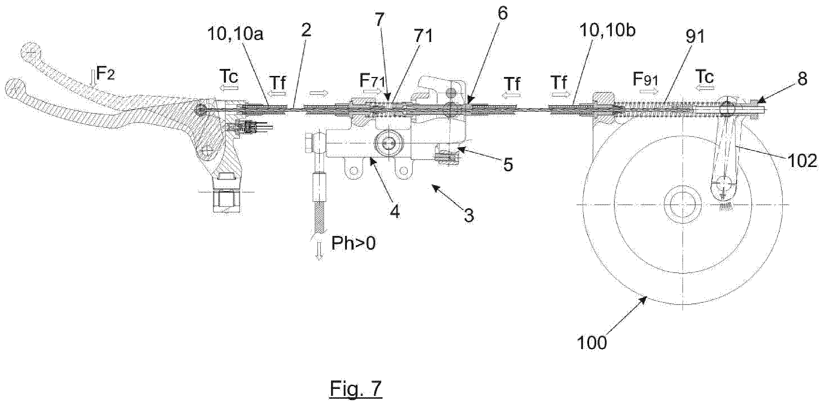

The distributing mechanism (3) comprises a delay element (7) configured to delay the movement of the activation cam (5) on the brake pump (4). According to the present example, said delay element (7) is formed by a delay spring (71), which opposes the reaction pull (Tf) of the sheath (10) with a delay force (F₇₁), enabling the movement of the activation cam (5) when the reaction pull (Tf) exceeds the delay force (F₇₁), figures 6 and 7.

The brake pump (4) and the activation cam (5) are joined through a rotation shaft (31), which enables a relative rotation movement between the brake pump (4) and the activation cam (5). At the same time, the brake pump (4) comprises a supporting body (41), and an actuator shaft (42) configured to receive the movement of the activation cam (5) and transmit a hydraulic pressure (Ph) towards the hydraulic brake (200), figures 6 and 7.

The activation cam (5) comprises an oscillating body (51) joined to the supporting body (41) through the rotation shaft (31), and a pushing face (52) in contact with the actuator shaft (42). Likewise, the activation cam (5) comprises a limiting stop (53) configured to come into contact with the supporting body (41) of the brake pump (4) and stop the movement of said activation cam (5), figures 6 and 7.

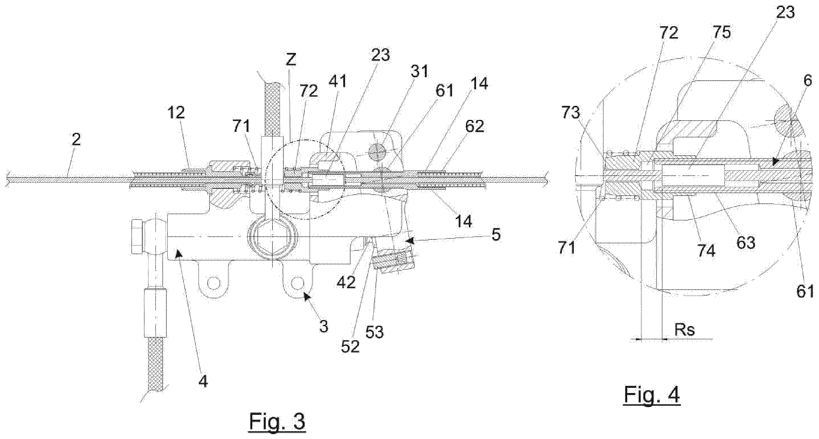

In Figure 3 it can be observed that to regulate the delay force (F₇₁), the delay element (7) comprises an adjusting nut (72) configured to regulate the preload of the delay spring (71). In turn, said adjusting nut (72) has a pushing end (73) in contact with the delay spring (71) and an adjusting end (74) screwed to a delay end (63) of the transmission element (6), figure 4. In such a way that by screwing and unscrewing said adjusting nut (72) it is possible to vary the relative position thereof with respect to the delay end (63), making it possible to adjust the compression of the delay spring (71).

As can be appreciated in Figure 4, the cable (2) optionally comprises an intermediate terminal (23), which is integral therewith and configured to cause the movement of the activation cam (5) following a safety stroke (Rs) of said cable (2). At the same time, the delay end (63) and the adjustment end (74) internally delimit a chamber (75) in which is arranged the intermediate terminal (23), in such a way that the cable pull (Tc) causes said intermediate terminal (23) to move across the chamber (75) until contacting the adjustment end (74), once the cable (2) reaches the safety stroke (Rs).

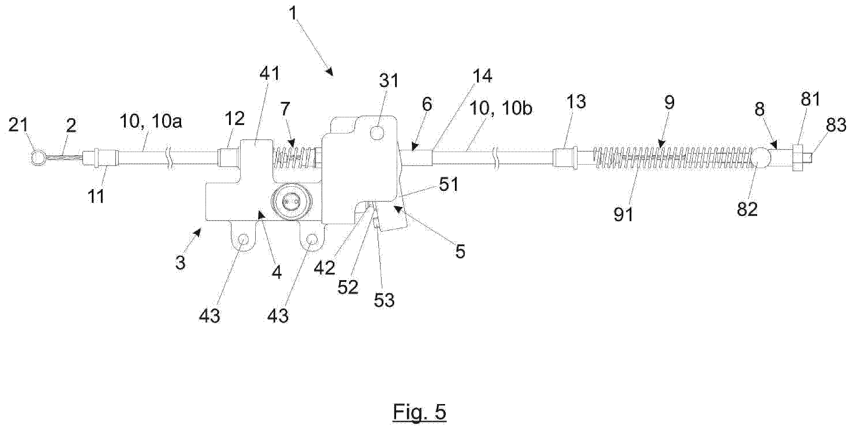

Figure 5 shows a longitudinal view of the device (1) before being installed into a vehicle. It is quite easy to incorporate the device in a vehicle and to adapt it to existing vehicles. For example, it can be directly mounted on the frame of the vehicle using fixing elements (43) prepared to be used with screws or carry out a floating mounting using plastic ties.

As can be appreciated, the device (1) comprises a pulling element (8) configured to pull the cable (2), wherein said pulling element (8) is formed by:
- a regulating nut (81) that has a junction point (82) configured to be joined to the mechanical brake (100); and
- a threaded shaft (83) joined to an end of the cable (2), that goes through said regulating nut (81) and is configured to move linearly with respect to the same by screwing and unscrewing said regulating nut (81).

In order to adjust the activation sensitivity of the mechanical brake (100), the combined brake device comprises an adjusting element (9) configured to adjust an initial stroke (R₀) of the cable (2) following which the actuation of the mechanical brake starts (100). Sad adjusting element (9) is formed by an adjusting spring (91), which opposes the cable pull (Tc) with an initial force (F₉₁), enabling the movement of the activation lever (102) of the mechanical brake (100) when the cable pull (Tc) exceeds the initial force (F₉₁), figures 6 and 7.

The sheath (10) comprises:
- a first length (10a) that has a first end stop (11) configured to be fixed to the first activation (101) and a first intermediate stop (12) joined to the distributing mechanism (3); and
- a second length (10b) that has a second end stop (13) configured to be fixed to the mechanical brake (100) and a second intermediate stop (14) joined to the distributing mechanism (3).

According to the present example, the first intermediate stop (12) is joined to the supporting body (41) of the brake pump (4), while the second intermediate stop (14) is joined to the junction end (62) of the transmission element (6), figures 2 and 3.

Figures 6 and 7 aid to achieve a better understanding of the operating principle of the present invention, representing the forces and pulls generated in two representative actuating positions of the first activation (101).

As can be appreciated in Figure 6, the first activation (101) receives a first activation force (F₁) so as to cause a cable pull (Tc). This automatically generates a reaction pull (Tf) of the sheath (10) of similar magnitude, both on the first length (10a) and on the second length (10b) thereof. This cable pull (Tc) is proportional to the characteristic ratio of the first activation (101), according to the expression Tc = F₁ x (L1/L2). To be more precise, the reaction pull (Tf) is proportional to the cable pull (Tc) and the performance of the sheath (µf), which in turn depends on its own features and on the stroke thereof (path) in the vehicle. Thus, Tf = Tc - (µf x Tc).

Once a cable pull (Tc) equal to or above the preload of the adjusting spring (91) is reached, i.e., equal to or above the initial force (F₉₁), the activation lever (102) starts moving until absorbing the initial stroke (R₀), also known as sagging. The mechanical brake (100) starts acting once said initial stroke (R₀) has been reached.

In the position reflected, the hydraulic pressure (Ph) transmitted towards the hydraulic brake (200) is null. In other words, the reaction pull (Tf) is lower than the delay force (F₇₁) of the delay spring (71). Therefore, the hydraulic brake (200) is not operating.

As can be appreciated in Figure 7, the first activation (101) receives a second activation force (F₂) larger than the first activation force (F₁). In the position reflected, it is observed that the reaction pull (Tf) has exceeded the value of the delay force (F₇₁) of the delay spring (71), enabling the hydraulic pressure (Ph) transmitted towards the hydraulic brake (200) by the brake pump (4) to be higher than zero. In such a way that both brakes (100, 200) are operating.

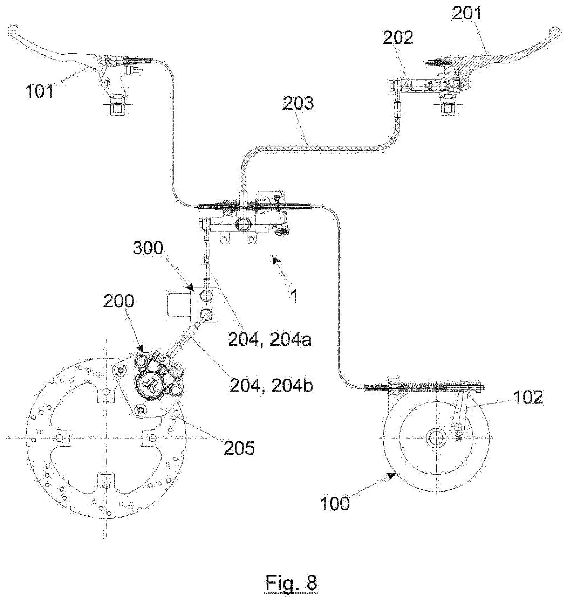

Figure 8 shows a diagram of a brake system of a motorcycle, according to a second exemplary application, which incorporates the combined brake device (1) of the present invention, and which is further complemented by an anti-lock system or ABS (300) on the front wheel. Said anti-lock system (300) is integrated on the second hydraulic hose (204), such that the latter is in turn divided into two sub-lengths (204a, 204b).

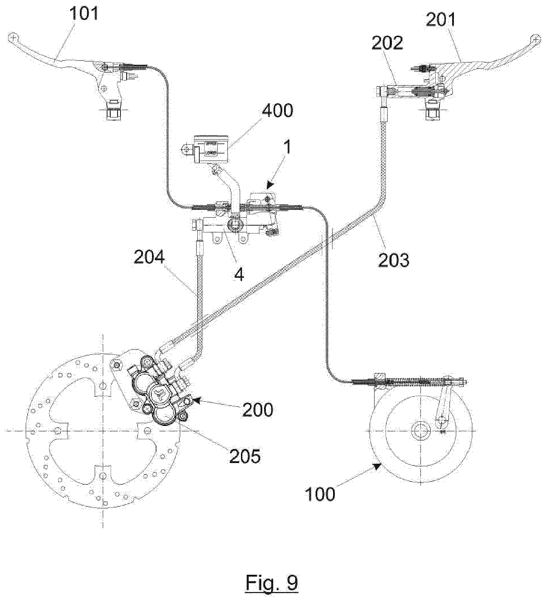

Figure 9 shows a diagram of a brake system of a motorcycle, according to a third exemplary application, which incorporates the combined brake device (1) of the present invention, and which further enables actuating on several pistons of the brake caliper using independent hydraulic circuits.

The combined brake device (1) of the present invention is designed to act on one or more pistons of the brake caliper (205) integrated in one single hydraulic circuit, as it can be appreciated in the exemplary applications shown in figures 1 and 8. To this end, a manual brake pump (202) is used, which acts directly on the pistons of the brake caliper (205) propelling the brake fluid, and a slave brake pump (4), which acts on the same pistons when the first activation is activated.

The present example reflects, nevertheless, a brake caliper (205), which operates with two independent hydraulic circuits that actuate different pistons, pressing the same pair of pads. To this end, a first circuit establishes the communication of the brake fluid between the manual brake pump (202) and first pistons of the brake caliper (205), through the first hydraulic hose (203). Likewise, a second circuit establishes the communication of the brake fluid of a second tank (400), integrated in the brake pump (4) of the distributing mechanism (3), with second pistons of the brake caliper (205), through the second hydraulic hose (204). The second tank (400) enables the brake pump (4) to compensate the movement of the pistons connected to the second circuit, as the brake pads wear out. In this system, the manual brake pump (202) starts commanding the first circuit of the brake caliper (205) in such a way that the hydraulic link between the manual pump (202) and the distributing mechanism (3) is lost.

## Claims

1. A combined brake device for vehicles, comprising:
• a cable (2) configured to activate a mechanical brake (100) by means of a cable pull (Tc) caused by a first activation (101); and
• a distributing mechanism (3) comprising:
- a brake pump (4) configured to activate a hydraulic brake (200); and
- an activation cam (5) configured to act on the brake pump (4) through the action of the first activation (101);
wherein the cable (2) is provided with a sheath (10) linked to the activation cam (5), and the cable pull (Tc) generates a reaction pull (Tf) of the sheath (10) capable of causing a movement of the activation cam (5) configured to activate the brake pump (4), and the distributing mechanism (3) comprises a transmission element (6) configured to transmit the reaction pull (Tf) of the sheath (10) on the activation cam (5);
said device (1) being **characterized in that** the transmission element (6) is joined to the activation cam (5) by means of a rotatory hinge (61), which enables the rotation of said activation cam (5), and has a junction end (62) configured to retain the sheath (10) while at the same time letting the cable (2) pass through the transmission element (6); **and in that** the brake pump (4) and the activation cam (5) are joined through a rotation shaft (31), which enables a relative rotation movement between the brake pump (4) and the activation cam (5).

2. The combined brake device according to claim 1 **characterized in that** the cable (2) comprises a first terminal (21) configured to be joined to the first activation (101), and a second terminal (22) configured to be joined to the mechanical brake (100), wherein said cable (2) has a continuity between the first terminal (21) and the second terminal (22).

3. The combined brake device according to any of the claims 1 to 2, **characterized in that** the cable (2) comprises an intermediate terminal (23), which is integral therewith and configured to cause the movement of the activation cam (5) following a safety stroke (Rs) of said cable (2).

4. The combined brake device according to any of the claims 1 to 3, **characterized in that** the distributing mechanism (3) comprises a delay element (7) configured to delay the movement of the activation cam (5) on the brake pump (4), wherein said delay element (7) is formed by a delay spring (71), which opposes the reaction pull (Tf) of the sheath (10) with a delay force (F₇₁), enabling the movement of the activation cam (5) when the reaction pull (Tf) exceeds the delay force (F₇₁).

5. The combined brake device according to claim 4 **characterized in that** the transmission element (6) comprises a delay end (63) joined to the delay element (7).

6. The combined brake device according to claim 5 **characterized in that** the delay element (7) comprises an adjusting nut (72) configured to regulate the preload of the delay spring (71), which in turn has a pushing end (73) in contact with the delay spring (71) and an adjusting end (74) screwed to the delay end (63), wherein the screwing and unscrewing of said adjusting nut (72) varies the relative position thereof with regard to the delay end (63), making it possible to adjust the compression of the delay spring (71).

7. The combined brake device according to the claims 3 and 6 **characterized in that** the delay end (63) and the adjustment end (74) internally delimit a chamber (75) in which the intermediate terminal (23) is arranged, wherein the cable pull (Tc) causes said intermediate terminal (23) to move across the chamber (75) until contacting the adjustment end (74), once the cable (2) reaches the safety stroke (Rs).

8. The combined brake device according to any of the claims 1 to 7 **characterized in that** the brake pump (4) comprises a supporting body (41), and an actuator shaft (42) configured to receive the movement of the activation cam (5) and transmit a hydraulic pressure (Ph) towards the hydraulic brake (200); **and in that** the activation cam (5) comprises an oscillating body (51) joined to the supporting body (41) through the rotation shaft (31), and a pushing face (52) in contact with the actuator shaft (42).

9. The combined brake device according to claim 8 **characterized in that** the activation cam (5) comprises a limiting stop (53) configured to come into contact with the supporting body (41) of the brake pump (4) and stop the movement of said activation cam (5).

10. The combined brake device according to any of the claims 1 to 9 **characterized in that** it comprises a pulling element (8) configured to pull the cable (2), wherein said pulling element (8) is formed by:
• a regulating nut (81) that has a junction point (82) configured to be joined to the mechanical brake (100); and
• a threaded shaft (83) joined to an end of the cable (2), that goes through said regulating nut (81) and is configured to move linearly with respect to the same by screwing and unscrewing said regulating nut (81).

11. The combined brake device according to any of the claims 1 to 10 **characterized in that** it comprises an adjusting element (9) configured to adjust an initial stroke (R₀) of the cable (2) following which the activation of the mechanical brake (100) starts, wherein said adjusting element (9) is formed by an adjusting spring (91), which opposes the cable pull (Tc) with an initial force (F₉₁), enabling the movement of an activation lever (102) of the mechanical brake (100) when the cable pull (Tc) exceeds the initial force (F₉₁).

12. The combined brake device according to any of the claims 1 to 11 **characterized in that** the sheath (10) comprises:
• a first length (10a) that has a first end stop (11) configured to be fixed to the first activation (101) and a first intermediate stop (12) joined to the distributing mechanism (3); and
• a second length (10b) that has a second end stop (13) configured to be fixed to the mechanical brake (100) and a second intermediate stop (14) joined to the distributing mechanism (3).

## Patentansprüche

1. Kombinierte Bremsvorrichtung für Fahrzeuge, umfassend:
• ein Kabel (2), welches konfiguriert ist, um eine mechanische Bremse (100) mittels eines Seilzugs (Tc), erzeugt durch eine erste Aktivierung (101), zu aktivieren; und
• einen Verteilmechanismus (3), welcher Folgendes umfasst:
- eine Bremspumpe (4), welche konfiguriert ist, um eine hydraulische Bremse zu aktivieren (200); und
- einen Aktivierungsnocken (5), welcher konfiguriert ist, um auf die Bremspumpe (4) durch die Wirkung der ersten Aktivierung (101) zu wirken;
wobei das Kabel (2) mit einem Kabelmantel (10) bereitgestellt ist, welcher mit dem Aktivierungsnocken (5) verbunden ist, und der Seilzug (Tc) einen Reaktionszug (Tf) des Kabelmantels (10) erzeugt, welcher eine Bewegung des zum Aktivieren der Bremspumpe (4) konfigurierten Aktivierungsnockens (5) erzeugen kann, und der Verteilmechanismus (3) ein Übertragungselement (6) umfasst, welches zum Übertragen des Reaktionszugs (Tf) des Kabelmantels (10) auf den Aktivierungsnocken (5) konfiguriert ist;
wobei die Vorrichtung (1) **dadurch gekennzeichnet ist, dass** das Übertragungselement (6) mit dem Aktivierungsnocken (5) mittels eines Drehscharniers (61) verbunden ist, welches die Drehung des Aktivierungsnockens (5) ermöglicht und ein Verbindungsende (62) aufweist, welches konfiguriert ist, um den Kabelmantel (10) zu sperren, während es gleichzeitig das Durchlaufen des Kabels (2) durch das Übertragungselement (6) erlaubt; **und dadurch**, dass die Bremspumpe (4) und der Aktivierungsnocken (5) durch eine Drehwelle (31), welche eine relative Drehbewegung zwischen der Bremspumpe (4) und dem Aktivierungsnocken (5) ermöglicht, verbunden sind.

2. Kombinierte Bremsvorrichtung nach Anspruch 1, **dadurch gekennzeichnet, dass** das Kabel (2) einen ersten Anschluss (21), welcher konfiguriert ist, um mit der ersten Aktivierung (101) verbunden zu werden, und einen zweiten Anschluss (22) umfasst, welcher konfiguriert ist, um mit der mechanischen Bremse (100) verbunden zu werden, wobei das Kabel (2) eine Kontinuität zwischen dem ersten Anschluss (21) und dem zweiten Anschluss (22) aufweist.

3. Kombinierte Bremsvorrichtung nach einem der Ansprüche 1 bis 2, **dadurch gekennzeichnet, dass** das Kabel (2) einen Zwischenanschluss (23) umfasst, welcher einstückig damit ist und konfiguriert ist, um die Bewegung des Aktivierungnockens (5) nach einem Sicherheitsstoß (Rs) des Kabels (2) zu verursachen.

4. Kombinierte Bremsvorrichtung nach einem der Ansprüche 1 bis 3, **dadurch gekennzeichnet, dass** der Verteilmechanismus (3) ein Verzögerungselement (7) umfasst, welches konfiguriert ist, um die Bewegung des Aktivierungsnockens (5) auf der Bremspumpe (4) zu verzögern, wobei das Verzögerungselement (7) aus einer Verzögerungsfeder (71) besteht, welche dem Reaktionszug (Tf) des Kabelmantels (10) mit einer Verzögerungskraft (F₇₁) entgegenwirkt, wobei sie die Bewegung des Aktivierungsnockens (5) ermöglicht, wenn der Reaktionszug (Tf) die Verzögerungskraft (F₇₁) überschreitet.

5. Kombinierte Bremsvorrichtung nach Anspruch 4, **dadurch gekennzeichnet, dass** das Übertragungselement (6) ein Verzögerungsende (63) umfasst, welches mit dem Verzögerungselement (7) verbunden ist.

6. Kombinierte Bremsvorrichtung nach Anspruch 5, **dadurch gekennzeichnet, dass** das Verzögerungselement (7) eine Verstellmutter (72) umfasst, welche konfiguriert ist, um die Vorspannung der Verzögerungsfeder (71) einzustellen, welche wiederum ein Druckende (73) in Kontakt mit der Verzögerungsfeder (71) und ein Verstellende (74), welches an das Verzögerungsende (63) geschraubt ist, aufweist, wobei das Schrauben und Abschrauben der Verstellmutter (72) die relative Position davon in Bezug auf das Verzögerungsende (63) ändert, was das Verstellen der Kompression der Verzögerungsfeder (71) ermöglicht.

7. Kombinierte Bremsvorrichtung nach Anspruch 3 und 6, **dadurch gekennzeichnet, dass** das Verzögerungsende (63) und das Verstellende (74) eine Kammer (75) innerlich abgrenzen, in welcher der Zwischenanschluss (23) angeordnet ist, wobei der Kabelzug (Tc) das Bewegen des Zwischenanschlusses (23) durch die Kammer (75) bis zum Erreichen des Verstellendes (74) verursacht, sobald das Kabel (2) den Sicherheitsstoß (Rs) erreicht.

8. Kombinierte Bremsvorrichtung nach einem der Ansprüche 1 bis 7, **dadurch gekennzeichnet, dass** die Bremspumpe (4) einen Stützkörper (41) und eine Betätigungswelle (42), welche konfiguriert ist, um die Bewegung des Aktivierungsnockens (5) zu empfangen und einen hydraulischen Druck (Ph) zur hydraulischen Bremse (200) zu übertragen, umfasst; **und dadurch**, dass der Aktivierungsnocken (5) einen Schwingkörper (51), welcher mit dem Stützkörper (41) durch die Drehwelle (31) verbunden ist, und eine Druckfläche (52) welche in Kontakt mit der Betätigungswelle (42) ist, umfasst.

9. Kombinierte Bremsvorrichtung nach Anspruch 8, **dadurch gekennzeichnet, dass** der Aktivierungsnocken (5) einen Begrenzungsanschlag (53) umfasst, welcher konfiguriert ist, um mit dem Stützkörper (41) der Bremspumpe (4) in Kontakt zu kommen und die Bewegung des Aktivierungsnockens (5) anzuhalten.

10. Kombinierte Bremsvorrichtung nach einem der Ansprüche 1 bis 9, **dadurch gekennzeichnet, dass** sie ein Zugelement (8) umfasst, welches konfiguriert ist, um das Kabel (2) zu ziehen, wobei das Zugelement (8) aus Folgendem besteht:
• einer Einstellmutter (81), welche einen Verbindungspunkt (82) aufweist, der zum Verbinden mit der mechanischen Bremse (100) konfiguriert ist; und
• einer Gewindewelle (83), welche mit einem Ende des Kabels (2) verbunden ist, welches die Einstellmutter (81) durchläuft, und konfiguriert ist, um sich linear in Bezug darauf durch Schrauben und Abschrauben der Einstellmutter (81) zu bewegen.

11. Kombinierte Bremsvorrichtung nach einem der Ansprüche 1 bis 10, **dadurch gekennzeichnet, dass** sie ein Verstellelement (9) umfasst, welches konfiguriert ist, um einen anfänglichen Stoß (R₀) des Kabels (2), nach welchem die Aktivierung der mechanischen Bremse (100) beginnt, zu verstellen, wobei das Verstellelement (9) aus einer Verstellfeder (91) besteht, welche dem Kabelzug (Tc) mit einer anfänglichen Kraft (F₉₁) entgegenwirkt, wobei sie die Bewegung eines Aktivierungsnockens (102) der mechanischen Bremse (100) ermöglicht, wenn der Kabelzug (Tc) die anfängliche Kraft (F₉₁) überschreitet.

12. Kombinierte Bremsvorrichtung nach einem der Ansprüche 1 bis 11, **dadurch gekennzeichnet, dass** der Kabelmantel (10) Folgendes umfasst:
• eine erste Länge (10a), welche einen ersten Endanschlag (11), der konfiguriert ist, um an der ersten Aktivierung (101) befestigt zu sein, und einen ersten Zwischenanschlag (12) aufweist, welcher mit dem Verteilmechanismus (3) verbunden ist; und
• eine zweite Länge (10b), welche einen zweiten Endanschlag (13), der konfiguriert ist, um an der mechanischen Bremse (100) befestigt zu sein, und einen zweiten Zwischenanschlag (14) aufweist, welcher mit dem Verteilmechanismus (3) verbunden ist.

## Revendications

1. Dispositif de freinage combiné pour véhicules, comprenant :
• un câble (2) configuré pour activer un frein mécanique (100) par le biais d'une traction de câble (Tc) causée par une première activation (101) ; et
• un mécanisme de distribution (3) comprenant :
- une pompe de freinage (4) configuré pour activer un frein hydraulique (200) ; et
- une came d'activation (5) configurée pour agir sur la pompe de freinage (4) à travers l'action de la première activation (101) ;
dans lequel le câble (2) est pourvu d'une gaine (10) reliée à la came d'activation (5), et la traction de câble (Tc) génère une traction de réaction (Tf) de la gaine (10) apte à causer un mouvement de la came d'activation (5) configurée pour activer la pompe de freinage (4), et le mécanisme de distribution (3) comprend un élément de transmission (6) configuré pour transmettre la traction de réaction (Tf) de la gaine (10) sur la came d'activation (5) ;
ledit dispositif (1) étant **caractérisé en ce que** l'élément de transmission (6) est relié à la came d'activation (5) par le biais d'une charnière rotative (61), qui permet la rotation de ladite came d'activation (5), et possède une extrémité de jonction (62) configurée pour retenir la gaine (10) tandis qu'en même temps on laisse que le câble (2) passe à travers l'élément de transmission (6) ; et **en ce que** la pompe de freinage (4) et la came d'activation (5) sont reliées à travers un arbre de rotation (31) qui permet un mouvement de rotation relative entre la pompe de freinage (4) et la came d'activation (5).

2. Dispositif de freinage combiné selon la revendication 1, **caractérisé en ce que** le câble (2) comprend un premier terminal (21) configuré pour être relié à la première activation (101) et un deuxième terminal (22) configuré pour être relié au frein mécanique (100), dans lequel ledit câble (2) a une continuité entre le premier terminal (21) et le deuxième terminal (22).

3. Dispositif de freinage combiné selon l'une quelconque des revendications 1 à 2, **caractérisé en ce que** le câble (2) comprend un terminal intermédiaire (23), qui est solidaire à celui-ci et configuré pour produire le mouvement de la came d'activation (5) suivant une course de sécurité (Rs) dudit câble (2).

4. Dispositif de freinage combiné selon l'une quelconque des revendications 1 à 3, **caractérisé en ce que** le mécanisme de distribution (3) comprend un élément de retard (7) configuré pour retarder le mouvement de la came d'activation (5) sur la pompe de freinage (4) dans lequel ledit élément de retard (7) est formé par un ressort de retard (71), qui s'oppose à la traction de réaction (Tf) de la gaine (10) avec une force de retard (F₇₁), permettant le mouvement de la came d'activation (5) lorsque la traction de réaction (Tf) dépasse la force de retard (F₇₁).

5. Dispositif de freinage combiné selon la revendication 4, **caractérisé en ce que** l'élément de transmission (6) comprend une extrémité de retard (63) reliée à l'élément de retard (7).

6. Dispositif de freinage combiné selon la revendication 5, **caractérisé en ce que** l'élément de retard (7) comprend un écrou d'ajustement (72) configuré pour régler la précharge du ressort de retard (71), qui à son tour possède une extrémité de poussée (73) en contact avec le ressort de retard (71) et une extrémité d'ajustement (74) vissée à l'extrémité de retard (63), dans lequel le vissage et dévissage dudit écrou d'ajustement (72) varie sa position relative par rapport à l'extrémité de retard (63), en permettant l'ajustement de la compression du ressort de retard (71).

7. Dispositif de freinage combiné selon les revendications 3 et 6, **caractérisé en ce que** l'extrémité de retard (63) et l'extrémité d'ajustement (74) délimitent intérieurement une chambre (75) dans laquelle est aménagée le terminal intermédiaire (23), dans lequel la traction de câble (Tc) fait que le terminal intermédiaire (23) se déplace à travers la chambre (75) jusqu'à entrer en contact avec l'extrémité d'ajustement (74), une fois que le câble (2) atteint la course de sécurité (Rs).

8. Dispositif de freinage combiné selon l'une quelconque des revendications 1 à 7, **caractérisé en ce que** la pompe de freinage (4) comprend un corps de support (41), et un arbre d'actionnement (42) configuré pour recevoir le mouvement de la came d'activation (5) et transmettre une pression hydraulique (Ph) vers le frein hydraulique (200) ; et **en ce que** la came d'activation (5) comprend un corps oscillant (51) relié au corps de support (41) à travers l'arbre de rotation (31), et une face de poussée (52) en contact avec l'arbre d'actionnement (42).

9. Dispositif de freinage combiné selon la revendication 8, **caractérisé en ce que** la came d'activation (5) comprend une butée de limite de course (53) configurée pour entrer en contact avec le corps de support (41) de la pompe de freinage (4) et arrêter le mouvement de ladite came d'activation (5).

10. Dispositif de freinage combiné selon l'une quelconque des revendications 1 à 9, **caractérisé en ce qu'**il comprend un élément de traction (8) configuré pour tirer sur le câble (2), dans lequel ledit élément de traction (8) est formé par :
• un écrou d'ajustement (81) qui possède un point de jonction (82) configuré pour être relié au frein mécanique (100) ; et
• un arbre fileté (83) relié à une extrémité du câble (2), qui traverse ledit écrou d'ajustement (81) et qui est configuré pour se déplacer linéairement par rapport à celui-ci en vissant ou dévissant ledit écrou d'ajustement (81).

11. Dispositif de freinage combiné selon l'une quelconque des revendications 1 à 10, **caractérisé en ce qu'**il comprend un élément d'ajustement (9) configuré pour ajuster une course initiale (R₀) du câble (2) suivant laquelle l'activation du frein mécanique (100) commence, dans lequel ledit élément d'ajustement (9) est formé par un ressort d'ajustement (91), qui s'oppose à la traction de câble (Tc) avec une force initiale (F₉₁), permettant le mouvement d'un levier d'activation (102) du frein mécanique (100) lorsque la traction de câble (Tc) dépasse la force initiale (F₉₁).

12. Dispositif de freinage combiné selon l'une quelconque des revendications 1 à 11, **caractérisé en ce que** la gaine (10) comprend :
• une première longueur (10a) qui a une première butée d'extrémité (11) configurée pour être fixée à la première activation (101) et une première butée intermédiaire (12) reliée au mécanisme de distribution (3) ; et
• une deuxième longueur (10b) qui a une deuxième butée d'extrémité (13) configurée pour être fixée au frein mécanique (100) et une deuxième butée intermédiaire (14) reliée au mécanisme de distribution (3).
